# EUROPEAN PATENT APPLICATION

(11) **EP 3 312 951 A1**
(43) Date of publication of application: **25.04.2018**
(21) Application number: 16811192.0
(22) Date of filing: 25.05.2016
(51) Int. Cl.: H01T 13/20

(54) **SPARK PLUG**

(30) Priority: 18.06.2015 JP 2015123301
(71) Applicant: NGK Spark Plug Co., Ltd., Nagoya-shi, Aichi 467-8525 (JP)
(72) Inventor: KUROSAWA, Kazuhiro, Nagoya-shi Aichi 467-8525 (JP); TAKAOKA, Katsuya, Nagoya-shi Aichi 467-8525 (JP); TANAKA, Kuniharu, Nagoya-shi Aichi 467-8525 (JP); HONDA, Toshitaka, Nagoya-shi Aichi 467-8525 (JP); KURONO, Hirokazu, Nagoya-shi Aichi 467-8525 (JP); UEGAKI, Hironori, Nagoya-shi Aichi 467-8525 (JP)
(74) Representative: Laufhütte, Dieter
(86) International application number: PCT/JP2016/002522
(87) International publication number: WO 2016/203713

(57) **Abstract**

Disclosed is a spark plug capable of suppressing radio noise with the use of a magnetic substance. The spark plug has a connection structure arranged to establish electrical connection between a center electrode and a metal terminal within a through hole of an insulator. The connection structure is provided with a composite part. The composite part contains a plurality of secondary particles each formed of a plurality of primary particles of iron-containing oxide as a magnetic substance, and a conductive material coating the plurality of secondary particles. The iron-containing oxide includes at least one of an oxide represented by M_{1+A}OFe_{2-A}O₃ (where -0.5 ≤ A ≤ 0.5; and M is at least one kind of element selected from the group consisting of Mn, Fe, Co, Ni, Cu, Mg, Zn and Ca) and an oxide represented by Q₃Fe₅O₁₂ (where Q is at least one kind of element selected from the group consisting of Y, Lu, Yb, Tm, Er, Ho, Dy, Tb, Gd and Sm). In a cross section of the composite part taken along the axis, an average particle size of the primary particles is 0.5 µm to 100 µm, an average particle size of the secondary particles is 0.5 mm to 2.0 mm, and a porosity of the inside of the secondary particles is 5% or lower.

## Description

### Field of the Invention

The present invention relates to a spark plug.

### Background Art

A spark plug is conventionally used in an internal combustion engine. For the purpose of suppressing radio noise caused by ignition, it has been proposed to provide a resistor in a through hole of an insulator of the spark plug. It has also been proposed to provide a magnetic substance in a through hole of an insulator of the spark plug.

### Prior Art Documents

### Patent Document

Patent Document 1: Japanese Laid-Open Patent Publication No. H02-284374
Patent Document 2: Japanese Laid-Open Patent Publication No. S62-150681
Patent Document 3: Japanese Laid-Open Patent Publication No. S61-230281
Patent Document 4: Japanese Laid-Open Patent Publication No. S54-151736
Patent Document 5: Japanese Laid-Open Patent Publication No. S61-135079
Patent Document 6: Japanese Laid-Open Patent Publication No. S61-104580
Patent Document 7: Japanese Laid-Open Patent Publication No. S61-208768

### Summary of the Invention

### Problems to be Solved by the Invention

However, sufficient improvements and modifications have not been made to the suppression of radio noise with the use of the magnetic substance.

The present invention discloses a technique for suppressing radio noise with the use of a magnetic member.

### Means for Solving the Problems

The present invention provides, for example, the following application examples.

### [Application Example 1]

A spark plug comprising: an insulator having a through hole formed therethrough in a direction of an axis of the spark plug; a center electrode at least partially inserted in a front end side of the through hole; a metal terminal at least partially inserted in a rear end side of the through hole; and a connection structure arranged in the though hole to establish electrical connection between the center electrode and the metal terminal within the through hole,
wherein the connection structure comprises a composite part containing a plurality of secondary particles each formed of a plurality of primary particles of iron-containing oxide as a magnetic substance, and a conductive material coating the plurality of secondary particles,
wherein the iron-containing oxide includes at least one of an oxide represented by M_{1+A}OFe_{2-A}O₃ (where -0.5 ≤ A ≤ 0.5; and M is at least one kind of element selected from the group consisting of Mn, Fe, Co, Ni, Cu, Mg, Zn and Ca) and an oxide represented by Q₃Fe₅O₁₂ (where Q is at least one kind of element selected from the group consisting of Y, Lu, Yb, Tm, Er, Ho, Dy, Tb, Gd and Sm), and
wherein, in a cross section of the composite part taken including the axis, an average particle size of the primary particles is 0.5 µm to 100 µm, an average particle size of the secondary particles is 0.5 mm to 2.0 mm, and a porosity of the inside of the secondary particles is 5% or lower.

With this configuration, it is possible to adequately suppress radio noise.

### [Application Example 2]

The spark plug according to Application Example 1,
wherein the iron-containing oxide includes an oxide represented by Ni_{X}Zn_{Y}Fe_{Z}O₄ (where 0.3 ≤ X ≤ 0.8; 0.2 ≤ Y ≤ 0.7; 1.5 ≤ Z ≤ 2.5; and X + Y + Z = 3).

With this configuration, it is possible to more adequately suppress radio noise.

### [Application Example 3]

The spark plug according to Application Example 1 or 2,
wherein, assuming in the cross section that the inside of the secondary particles includes an inner zone located 100 µm or more from surfaces of the secondary particles and an outer peripheral zone located 50 µm or less from the surfaces of the secondary particles, a difference between a content of iron in terms of oxide in the inner zone and a content of iron in terms of oxide in the outer peripheral zone is 5.0 wt% or less.

With this configuration, it is possible to prevent uneven distribution of the magnetic substance within the inside of the secondary particles and thereby stably suppress radio noise.

### [Application Example 4]

The spark plug according to any one of Application Examples 1 to 3,
wherein the composite part includes a ceramic material containing at least one of silicon (Si), boron (B) and phosphorus (P), and an alkali metal component.

With this configuration, it is possible to improve the durability of the composite part.

### [Application Example 5]

The spark plug according to Application Example 4,
wherein the alkali metal component is contained in an amount of 0.5 wt% to 6.5 wt% in terms of oxide in the composite part.

With this configuration, it is possible to still more adequately suppress radio noise.

It should be noted that the present invention can be embodied in various forms such as not only a spark plug but also an internal combustion engine with a spark plug.

### Brief Description of Drawings

FIG. 1 is a cross-sectional view of a spark plug according to one embodiment of the present invention.
FIG. 2 is a schematic view of a composite part 200 of the spark plug.
FIG. 3 is a schematic view showing how to determine an average particle size.

### Description of Embodiments

### A. Embodiment

### A-1. Configurations of Spark Plug

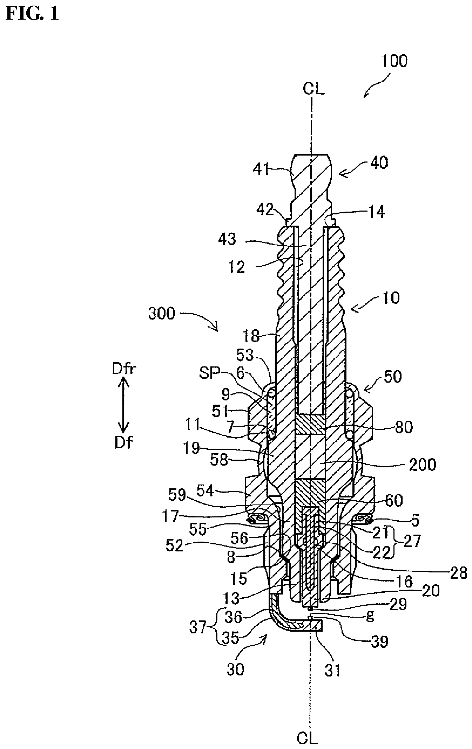

FIG. 1 is a cross-sectional view of a spark plug according to one embodiment of the present invention. In the figure, a center axis of the spark plug 100 is indicated as CL (hereinafter also referred to as "axis CL"). A cross section of the spark plug taken including the center axis CL is shown in the figure. Hereinafter, the direction parallel to the center axis CL is also referred to as "direction of the axis CL" or simply referred to as "axis direction" or "front-rear direction"; the direction of the radius of a circle about the center axis CL is also simply referred to as "radial direction"; the direction of the circumference of a circle about the center axis CL is also simply referred to as "circumferential direction". Among the directions parallel to the center axis CL, the direction toward the lower side of FIG. 1 is occasionally referred to as "frontward direction Df" or "front direction Df"; and the direction toward the upper side of FIG. 1 is occasionally referred to as "rearward direction Dfr" or "rear direction Dfr". The frontward direction Df corresponds to the direction from the after-mentioned metal terminal 40 toward electrodes 20 and 30. The frontward direction Df side of FIG. 1 is referred to as a front side of the spark plug 100. The rearward direction Dfr side of FIG. 1 is referred to as a rear side of the spark plug 100.

The spark plug 100 includes: a substantially cylindrical insulator 10 having a through hole 12 formed therethrough along the axis CL (hereinafter also referred to as "axial hole 12"); a center electrode 20 held in a front end side of the axial hole 12; a metal terminal 40 held in a rear end side of the axial hole 12; a connection structure 300 arranged in the axial hole 12 to establish electrical connection between the center electrode 20 and the metal terminal 40; a metal shell 50 fixed around an outer circumference of the insulator 10; and a ground electrode 30 having one end joined to a front end face of the metal shell 50 and the other end facing the center electrode 20 via a gap g.

The insulator 10 includes a large diameter portion 19 of the maximum outer diameter and includes a front body portion 17, a first outer-diameter decreasing portion 15 and a leg portion 13 located frontward of the large diameter portion 19 in this order toward the front. The first outer-diameter decreasing portion 15 has an outer diameter gradually decreasing toward the front. The insulator also includes a second outer-diameter decreasing portion 11 and a rear body portion 18 located rearward of the large diameter portion 19 in this order toward the rear. The second outer-diameter decreasing portion 11 has an outer diameter gradually decreasing toward the rear. The insulator further includes an inner-diameter decreasing portion 16 located in the vicinity of the first outer-diameter decreasing portion 15 (in FIG. 1, inside the front body portion 17) and having an inner diameter gradually decreasing toward the front. It is preferable to form the insulator 10 in view of its mechanical strength, thermal strength and electrical strength. For example, the insulator 11 is made of sintered alumina. (Any other insulating material can alternatively be used as the material of the insulator.)

The center electrode 20 includes a rod-shaped electrode shaft 27 extending along the axis CL and a first tip 29 joined to a front end of the electrode shaft 27. The first tip 29 is fixed to the electrode shaft 27 by e.g. laser welding. The center electrode 20 has a flange portion 28 of large outer diameter on a rear end side thereof. A frontward direction Df-side surface of the flange portion 28 is supported on the inner-diameter decreasing portion 16 of the insulator 11. A front end portion of the center electrode 20 protrudes in the frontward direction Df from a front end of the insulator 10.

The electrode shaft 27 has an outer layer 21 and a core 22. The outer layer 21 is made of a material (such as nickel-containing alloy) having higher oxidation resistance than that of the core 22. The core 22 is made of a material (such as pure copper, copper alloy etc.) having higher thermal conductivity than that of the outer layer 21. The first tip 29 is made of a material (such as iridium (Ir), noble metal e.g. platinum (Pt), tungsten (W) or an alloy containing at least one kind selected from those metals) having higher durability against discharge than that of the electrode shaft 27.

The metal terminal 40 includes a collar portion 42, a cap attachment portion 41 located rearward of the collar portion 42 and a leg portion 43 located frontward of the collar portion 42. The leg portion 43 is inserted in the through hole 12 of the insulator 10. The cap attachment portion 41 is situated rearward of the insulator 10 and exposed outside the through hole 12. The metal terminal 40 is made of a conductive material (such as metal e.g. low carbon steel). A metal layer for corrosion protection may be applied to a surface of the metal terminal 40. For example, it is feasible to apply a Ni layer by plating.

The connection structure 300 is arranged between the center electrode 20 and the metal terminal 40 within the axial hole 12 for electrical connection between the center electrode 20 and the metal terminal 40. The connection structure 300 includes a composite part 200 containing a magnetic substance and a conductive substance so as to suppress radio noise. The connection structure 300 further includes a first seal part 60 held in contact with the center electrode 20 and the composite part 200 and a second seal part 80 held in contact with the composite part 200 and the metal terminal 40. The seal parts 60 and 80 are made of, for example, particles of glass (such as B₂O₃-SiO₂ glass) and particles of metal (such as Cu, Fe etc.).

The metal shell 50 has a substantially cylindrical shape with a through hole 59 formed therethrough along the axis CL. The metal shell 50 is fixed around the outer circumference of the insulator 10 as the insulator 10 is inserted in the through hole 59 of the metal shell 50. A front end portion of the insulator 10 is exposed outside the through hole 59, whereas a rear end portion of the insulator 10 is exposed outside the through hole 59. The metal shell 50 is made of a conductive material (such as metal e.g. low carbon steel).

The metal shell 50 includes a body part 55 with a thread portion 52 formed on an outer circumferential surface thereof for screw engagement in a mounting hole of an internal combustion engine (such as gasoline engine). The metal shell also includes a seat portion 54 located rearward of the body part 55. An annular gasket 5 is fitted between the seat portion 54 and the thread portion 52. The metal shell further includes a deformation portion 58, a tool engagement portion 51 and a crimp portion 53 located rearward of the seat portion 54 in this order toward the rear. The deformation portion 58 is deformed such that a middle region of the deformed portion 58 protrudes outwardly in the radial direction (i.e. in the direction apart from the center axis CL). The tool engagement portion 51 is shaped (e.g. hexagonal in shape) such that a spark plug wrench can be engaged on the tool engagement portion 51. The crimp portion 53 is situated rearward of the second outer-diameter decreasing portion 11 of the insulator 10 and is bent inwardly in the radial direction.

There is a space SP surrounded by an inner circumferential surface of the metal shell 50 and an outer circumferential surface of the insulator 10 at a location between the crimp portion 53 of the metal shell 50 and the second outer-diameter decreasing portion 11 of the insulator 10. A first rear packing 6, a talc 9 and a second rear packing 7 are arranged within the space SP in this order toward the front. In the present embodiment, C-rings of iron are used as the rear packings 6 and 7. (These packings can be made of any other material.)

The body part 55 of the metal shell 50 includes an inner-diameter decreasing portion 56 having an inner diameter gradually decreasing toward the front. A front packing 8 is disposed between the inner-diameter decreasing portion 56 of the metal shell 50 and the first outer-diameter decreasing portion 15 of the insulator 10. In the present embodiment, a C-ring of iron is used as the front packing 8. (This packing can be made of any other material (such as other metal e.g. copper)).

During manufacturing of the spark plug 100, the crimp portion 53 is bent inwardly by crimping and thereby pressed toward the frontward direction Df side. Consequently, the deformation portion 58 is deformed to push the insulator 10 toward the front side through the packings 6 and 7 and the talc 9 within the metal shell 50. The front packing 8 is then pressed between the first outer-diameter decreasing portion 15 and the inner-diameter decreasing portion 56, thereby providing a seal between the metal shell 50 and the insulator 10 to prevent leakage of gas from a combustion chamber of the internal combustion engine through between the metal shell 50 and the insulator 10. In this state, the metal shell 50 is fixed to the insulator 10.

The ground electrode 30 includes a rod-shaped electrode shaft 37 and a second tip 29 joined to a distal end portion 31 of the electrode shaft 37. The ground electrode 30 is joined at one end thereof to the front end face of the metal shell 50 (by e.g. resistance welding). The electrode shaft 37 has a shape extending from the metal shell 50 in the frontward direction Df and bent to direct the distal end portion 31 toward the center axis CL. The second tip 39 is fixed to a rear side surface of the distal end portion 31 (by e.g. laser welding). The gap g is defined between the second tip 39 of the ground electrode 30 and the first tip 29 of the center electrode 20.

The electrode shaft 37 has a base 35 defining a surface of the electrode shaft 37 and a core 36 embedded in the base 35. The base 35, the core 36 and the second tip 39 of the ground electrode 30 are made of the same materials as those of the outer layer 21, the core 22 and the first tip 29 of the center electrode 20, respectively. At least either one of the first tip 29 and the second tip 39 may be omitted.

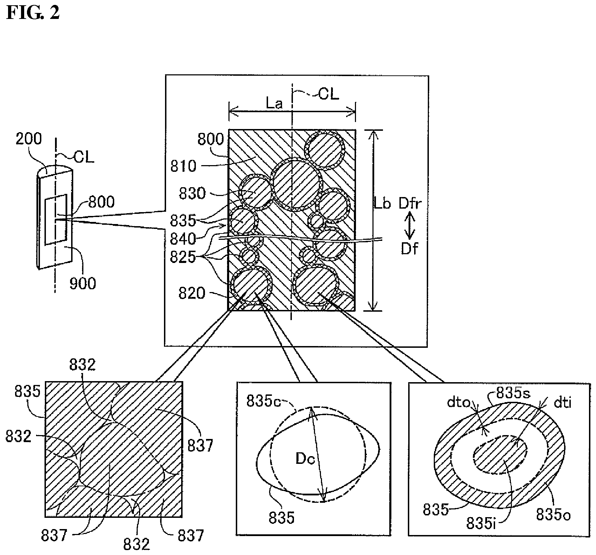

FIG. 2 is a schematic view of the composite part 200. The composite part 200 is shown in perspective view in the upper-left side of FIG. 2. In this perspective view, the composite part 200 is partially cut away such that a cross section 900 of the composite part 200 is taken along a plane including the center axis CL. A portion 800 of the cross section 900 (hereinafter referred to "target section 800") is schematically shown in enlargement in the upper-center side of FIG. 2. The target section 800 is a rectangular cross section centering on the center axis CL and defined by two sides parallel to the center axis CL and two other sides perpendicular to the center axis CL. Herein, the target section 800 is symmetrical in shape with respect to the center axis CL as the axis of symmetry. In the figure, a length of the target section 800 in the direction perpendicular to the center axis CL is set as a first length La; and a length of the target section 800 in the direction parallel to the center axis CL is set as a second length Lb. In the present embodiment, the first length La is set to 2 mm; and the second length Lb is set to 3 mm.

As shown by illustration, the target section 800 (that is, the cross section 900 of the composite part 200) includes a ceramic region 810, a conductive region 820 and a magnetic region 830. The magnetic region 830 contains a plurality of particulate areas 835 (hereinafter also referred to as "magnetic particle areas 835" or simply referred to as "particle areas 835"). The magnetic region 830 corresponds to a region of iron-containing oxide as the magnetic substance. Examples of the iron-containing oxide are spinel ferrite such as (Ni, Zn)Fe₂O₄ and garnet ferrite such as Y₃Fe₅O₁₂. The plurality of magnetic particle areas 835 are formed by using a powder of the iron-containing oxide as a material of the composite part 200. In the present embodiment, there are provided particulate clusters in each of which a plurality of particles of the iron-containing oxide included in the powder material are combined together as one magnetic particle area 835. The particulate clusters are produced by adding and mixing a solution of a binder etc. to the powder of the iron-containing oxide. The plurality of particles of the iron-containing oxide are formed into the particulate clusters of larger diameter by aggregation and by being bonded together via the binder. Herein, a plurality of particles forming a particulate cluster are referred to as "primary particles"; and a plurality of particulate clusters each formed from a plurality of primary particles are referred to as "secondary particles". In the cross section 900, one magnetic particle area 35 corresponds to a cross-sectional area of one secondary particle.

Although omitted from illustration, the plurality of secondary particles corresponding to the magnetic particle areas 835 have their respective surfaces coated by coating layers of conductive material. Examples of the conductive material are metals (such as Ni and Cu), perovskite oxides (such as SrTiO₃ and SrCrO₃), carbon (C) and carbon compounds (such as Cr₃C₂ and TiC).

In FIG. 2, the conductive region 820 corresponds to a cross section of the coating layers of the conductive material applied to the surfaces of the secondary particles. The conductive region 820 covers peripheral edges of the magnetic particle areas 835 as shown by illustration. The conductive region 820 thus contains a plurality of coating areas 825 respectively covering the plurality of magnetic particle areas 835. One coating area 825 corresponds to the coating on one magnetic particle area 835. One magnetic particle area 835 and its surrounding coating area 825 form one particulate area 840 (referred to as "composite particle area 840"). As shown by illustration, there are provided a plurality of composite particle areas 840 such that the coating areas 825 are in contact with each other so as to develop current conduction paths from the rearward direction Dfr side to the frontward direction Df side. As the conductive region 820 in which the current conduction paths are developed is located near the magnetic region 830, it is possible to suppress radio noise by means of the composite part 200.

Although omitted from illustration, there is a case where two composite particle areas 840 are located apart from each other in the target section 800 (that is, the cross section 900). These two composite particles areas 840 apart from each other in the target section 800 may correspond to cross sections of two three-dimensional particles that make contact with each other at a position in front or back of the target section 800. Namely, the plurality of composite particle areas 840, located in contact with or apart from each other in the target section 800, develop the current conduction paths from the rearward direction Dfr side to the frontward direction Df side such that electric current flows through the composite part 200 along the plurality of coating areas 825 of the plurality of composite particle areas 840 (that is, the conductive region 820) during discharge.

As mentioned above, the magnetic region 830 is covered by the conductive region 820. In other words, the current conduction paths are developed to surround the magnetic substance. The generation of radio noise by discharge is suppressed when the magnetic substance is located in the vicinity of the current flow path. For example, the radio noise can be suppressed by the action of the current conduction path as an inductance element. The radio noise can be effectively suppressed as the inductance of the current conduction path becomes high.

The magnetic particle area 835 is shown in enlargement in the lower-left side of FIG. 2. There are a plurality of pores 832 in the magnetic particle area 835 as shown in by illustration. The plurality of pores 832 correspond to clearances between the plurality of primary particles 837. Partial discharge may occur in the pores 832 during discharge of the spark plug 100. The occurrence of partial discharge in the pores 832 leads to a deterioration of the composite part 200, which can result in the generation of radio noise. For this reason, it is preferable that the occupation rate of the pores 832 in the magnetic particle area 835 (i.e. the ratio of the area of the pores 832 to the magnetic particle area 835) is small.

The ceramic region 810 is of ceramic material. As the ceramic material, there can be used e.g. a ceramic material containing at least one of silicon (Si), boron (B) and phosphorus (P). The ceramic material may be in the form of a glass. The glass may contain one or more oxides arbitrarily selected from silica (SiO₂), boron oxide (B₂O₅) and phosphorus oxide (P₂O₅). Alternatively, there can be used a ceramic material free of Si, B and P (such as a material containing Al₂O₃, BeF₂ etc.). The plurality of composite particle areas 840 (i.e. the plurality of magnetic particle areas 835 and the plurality of coating areas 825 coating the magnetic particle areas 835) are surrounded by the ceramic region 810. In other words, the plurality of composite particle areas 840 (conductive region 820 and magnetic region 830) are supported by the ceramic region 810.

In the lower-center side of FIG. 2, one particle area 835 on the cross section of the composite part 200 is shown along with one circle 835c. The circle 835c is an imaginary circle having the same area as the particle area 835 (hereinafter referred to as "imaginary circle 835"). In the figure, a diameter of the imaginary circle 835 is indicated as Dc. The diameter Dc is determined by approximation of the particle area 835 to a circle. The larger the particle area 835, the larger the approximate diameter Dc.

### A-2. Manufacturing Method

It is feasible to adopt any method as a manufacturing method of the spark plug 100 according to the first embodiment. The spark plug can be manufactured by e.g. the following method. First, powder materials for production of the insulator 10, the center electrode 20, the metal terminal 40, the conductive seal parts 60 and 80 and the composite part 20 are prepared.

For example, the powder material for production of the composite part 20 is prepared by the following procedure. The powder (of primary particles) of the iron-containing oxide is formed into secondary particles by adding and mixing therein the solution of the binder etc. As mentioned above, the secondary particles are formed by e.g. aggregation of the primary particles. The coating layers are formed on the secondary particles by plating so as to coat the surfaces of the secondary particles. Then, the powder material of the composite part 20 is prepared by mixing a powder of the ceramic material with the secondary particles coated by the coating layers. A substance containing an alkali metal (such as alkali metal oxide) may be added to the powder material of the composite part 200. The alkali metal refers to a metal element that belongs to group 1 of the periodic table. Specific examples of the alkali metal are lithium (Li), sodium (Na), potassium (K), rubidium (Rb), cesium (Cs) and francium (Fr). The coating layers may be provided by applying the binder solution to the surfaces of the secondary particles and thereby adhering particles of the conductive material to the secondary particles in place of plating. Even in this case, the powder material of the composite part 20 is prepared by mixing the powder of the ceramic material with the secondary particles coated by the coating layers.

The center electrode 20 is inserted in the though hole 12 of the insulator 10 (see FIG. 1) from a rearward direction Dfr-side opening (referred to as "rear opening") of the through hole 12. As explained above with reference to FIG. 1, the center electrode 20 is placed in position within the through hole 12 by being supported on the inner-diameter decreasing portion 16 of the insulator 10.

The powder materials of the first seal part 60, the composite part 200 and the second seal part 80 were charged and subjected to forming one by one in order from the part 60 to the part 200 and then to the part 80. Each of the powder materials was charged into the though hole 12 from the rear opening 14 and formed by the use of a rod inserted from the rear opening 14 into substantially the same shape as that of the corresponding part.

The insulator 10 is heated to a predetermined temperature higher than softening points of glass components contained in the respective powder materials. While the insulator 10 is heated at the predetermined temperature, the metal terminal 40 is inserted into the through hole 12 from the rear opening 14 of the through hole 12. As a result, the seal parts 60 and 80 and the composite part 200 are formed by compression and sintering of the powder materials.

After that, the metal shell 50 is assembled to the outer circumference of the insulator 10; and the ground electrode 30 is fixed to the metal shell 50. The ground electrode 30 is then subjected to bending. With this, the spark plug is completed.

### B. Evaluation Test

The following explanation will be given of evaluation tests on a plurality of kinds of samples of the spark plug 100 shown in FIG. 1. The configurations and evaluation test results of the respective samples are shown below in TABLES 1 to 5.

**TABLE 1**

| No. | Configurations | | | | | | | | | Evaluation items | | | | |
|---|---|---|---|---|---|---|---|---|---|---|---|---|---|---|
| | Magnetic region | | | | Conductive substance | Fe content difference (wt%) | Si B P | Alkali | | Noise evaluation | | | | Vibration test |
| | Composition | Primary particle size (µm) | Porosity (%) | Secondary particle size (µm) | | | | Element | Content (wt%) | 30 MHz (dB) | 100 MHz (dB) | 300 MHz (dB) | Noise variation (dB) | NG rate (%) |
| A-1 | MnFe₂O₄ | 21 | 3.5 | 1.5 | Ni | 6.0 | × | | 0 | 70 | 70 | 67 | 8 | 20 |
| A-2 | NiFe₂O₄ | 20 | 3.4 | 1.5 | Ni | 6.0 | × | | 0 | 69 | 70 | 67 | 8 | 20 |
| A-3 | CuFe₂O₄ | 22 | 3.5 | 1.5 | Ni | 6.0 | × | | 0 | 70 | 68 | 66 | 9 | 20 |
| A-4 | ZnFe₂O₄ | 25 | 3.6 | 1.5 | Ni | 6.0 | × | | 0 | 70 | 68 | 65 | 9 | 25 |
| A-5 | CoFe₂O₄ | 20 | 3.4 | 1.5 | Ni | 6.1 | × | | 0 | 70 | 67 | 66 | 8 | 25 |
| A-6 | FeFe₂O₄ | 18 | 3.7 | 1.5 | Ni | 6.2 | × | | 0 | 69 | 67 | 68 | 8 | 25 |
| A-7 | MgFe₂O₄ | 28 | 3.4 | 1.5 | Ni | 5.9 | × | | 0 | 70 | 69 | 68 | 10 | 25 |
| A-8 | Y₃Fc₅O₁₂ | 30 | 3.5 | 1.5 | Ni | 6.1 | × | | 0 | 70 | 68 | 66 | 10 | 20 |
| A-9 | Dy₃Fe₅O₁₂ | 22 | 3.5 | 1.5 | Ni | 6.0 | × | | 0 | 69 | 68 | 64 | 9 | 20 |
| A-10 | Lu₃Fe₅O₁₂ | 20 | 3.9 | 1.5 | Ni | 6.0 | × | | 0 | 68 | 69 | 65 | 8 | 25 |
| A-11 | Yb₃Fe₅O₁₂ | 29 | 3.8 | 1.5 | Ni | 6.6 | × | | 0 | 70 | 70 | 65 | 9 | 25 |
| A-12 | Tm₃Fe₅O₁₂ | 26 | 3.8 | 1.5 | Ni | 6.1 | × | | 0 | 67 | 69 | 66 | 10 | 20 |
| A-13 | Er₃Fe₅O₁₂ | 25 | 4.0 | 1.5 | Ni | 6.1 | × | | 0 | 68 | 67 | 67 | 9 | 25 |
| A-14 | Ho₃Fe₅O₁₂ | 25 | 3.4 | 1.5 | Ni | 6.3 | × | | 0 | 68 | 68 | 67 | 10 | 20 |
| A-15 | Tb₃Fe₅O₁₂ | 27 | 3.8 | 1.5 | Ni | 5.9 | × | | 0 | 69 | 67 | 66 | 8 | 20 |
| A-16 | Gd₃Fe₅O₁₂ | 30 | 3.8 | 1.5 | Ni | 5.9 | × | | 0 | 70 | 67 | 64 | 9 | 20 |
| A-17 | Sm₃Fe₅O₁₂ | 20 | 3.5 | 1.5 | Ni | 6.0 | × | | 0 | 68 | 68 | 64 | 10 | 20 |
| A-18 | Cu_{0.5}Fe_{2.5}O₄ | 0.5 | 3.3 | 1.5 | Ni | 8.1 | × | | 0 | 70 | 69 | 69 | 9 | 20 |

**TABLE 2**

| No. | Configurations | | | | | | | | | Evaluation items | | | | |
|---|---|---|---|---|---|---|---|---|---|---|---|---|---|---|
| | Magnetic region | | | | Conductive substance | Fe content difference (wt%) | Si B P | Alkali | | Noise evaluation | | | | Vibration test |
| | Composition | Primary particle size (µm) | Porosity (%) | Secondary particle size (µm) | | | | Element | Content (wt%) | 30 MHz (dB) | 100 MHz (dB) | 300 MHz (dB) | Noise variation (dB) | NG rate (%) |
| A-19 | Mg_{0.8}Fe_{2.2}O₄ | 46 | 2.1 | 1.5 | Ni | 6.2 | × | | 0 | 70 | 69 | 67 | 11 | 30 |
| A-20 | Mn_{0.6}Zn_{0.3}Fe_{2.1}O₄ | 45 | 2.0 | 1.5 | Ni | 6.2 | × | | 0 | 70 | 69 | 67 | 11 | 30 |
| A-21 | Co_{1.5}Fe_{1.5}O₄ | 100 | 4.5 | 1.5 | Ni | 5.1 | × | | 0 | 69 | 70 | 66 | 13 | 20 |
| A-22 | Ni_{0.25}Zn_{0.75}Fe₂O₄ | 10 | 2.5 | 1.5 | Ni | 5.5 | × | | 0 | 68 | 67 | 64 | 7 | 25 |
| A-23 | Ni_{0.7}Zn_{0.8}Fe_{1.5}O₄ | 30 | 0.8 | 1.5 | Ni | 6.8 | × | | 0 | 68 | 66 | 65 | 6 | 20 |
| A-24 | NiFe₂O₄ | 0.5 | 3.4 | 1.5 | Ni | 6.0 | × | | 0 | 68 | 68 | 66 | 8 | 25 |
| A-25 | NiFe₂O₄ | 50 | 3.5 | 1.5 | Ni | 6.1 | × | | 0 | 67 | 66 | 65 | 9 | 20 |
| A-26 | NiFe₂O₄ | 100 | 3.4 | 1.5 | Ni | 6.0 | × | | 0 | 68 | 68 | 65 | 9 | 25 |
| A-27 | NiFe₂O₄ | 20 | 1.5 | 1.5 | Ni | 6.1 | × | | 0 | 69 | 67 | 66 | 10 | 20 |
| A-28 | NiFe₂O₄ | 21 | 5.0 | 1.5 | Ni | 6.0 | × | | 0 | 70 | 69 | 67 | 11 | 20 |
| A-29 | NiFe₂O₄ | 20 | 3.5 | 0.5 | Ni | 6.0 | × | | 0 | 69 | 68 | 66 | 13 | 25 |
| A-30 | NiFe₂O₄ | 20 | 3.4 | 2 | Ni | 6.1 | × | | 0 | 68 | 67 | 68 | 10 | 25 |
| A-31 | NiFe₂O₄ | 20 | 3.6 | 1.5 | Inconel | 6.3 | × | | 0 | 68 | 66 | 67 | 11 | 25 |
| A-32 | NiFe₂O₄ | 24 | 3.4 | 1.5 | Cu | 6.1 | × | | 0 | 66 | 66 | 66 | 13 | 25 |
| A-33 | NiFe₂O₄ | 21 | 3.5 | 1.5 | LaMnO₃ | 5.9 | × | | 0 | 67 | 67 | 67 | 12 | 20 |
| A-34 | NiFe₂O₄ | 23 | 3.4 | 1.5 | C | 5.8 | × | | 0 | 67 | 66 | 68 | 10 | 30 |
| A-35 | NiFe₂O₄ | 19 | 3.5 | 1.5 | TiC | 5.4 | × | | 0 | 69 | 68 | 69 | 9 | 25 |

**TABLE 3**

| No. | Configurations | | | | | | | | | Evaluation items | | | | |
|---|---|---|---|---|---|---|---|---|---|---|---|---|---|---|
| | Magnetic region | | | | Conductive substance | Fe content difference (wt%) | Si B P | Alkali | | Noise evaluation | | | | Vibration test |
| | Composition | Primary particle size (µm) | Porosity (%) | Secondary particle size (µm) | | | | Element | Content (wt%) | 30 MHz (dB) | 100 MHz (dB) | 300 MHz (dB) | Noise variation (dB) | NG rate (%) |
| A-36 | Ni_{0.8}Zn_{0.2}Fe₂O₄ | 20 | 3.3 | 1.5 | Ni | 6.5 | × | | 0 | 53 | 51 | 51 | 8 | 15 |
| A-37 | Ni_{0.3}Zn_{0.7}Fe₂O₄ | 23 | 3.7 | 1.5 | Ni | 5.4 | × | | 0 | 52 | 50 | 51 | 8 | 20 |
| A-38 | Ni_{0.8}Zn_{0.7}Fe_{1.5}O₄ | 16 | 3.9 | 1.5 | Ni | 7.4 | × | | 0 | 54 | 52 | 50 | 6 | 30 |
| A-39 | Ni_{0.3}Zn_{0.2}Fe_{2.5}O₄ | 19 | 4.1 | 1.5 | Ni | 5.1 | × | | 0 | 55 | 53 | 54 | 10 | 20 |
| A-40 | Ni_{0.4}Zn_{0.4}Fe_{2.2}O₄ | 22 | 4.3 | 1.5 | Ni | 5.6 | × | | 0 | 54 | 51 | 50 | 7 | 25 |
| A-41 | Ni_{0.8}Zn_{0.2}Fe₂O₄ | 25 | 3.4 | 1.5 | Ni | 2.4 | × | | 0 | 55 | 53 | 50 | 1 | 20 |
| A-42 | Mg_{0.8}Fe_{2.2}O₄ | 48 | 4.2 | 1.5 | Ni | 1.6 | × | | 0 | 69 | 67 | 62 | 2 | 15 |
| A-43 | Y₃Fe₅O₁₂ | 30 | 4.5 | 1.5 | Ni | 5.0 | × | | 0 | 65 | 63 | 61 | 1 | 30 |
| A-44 | Ni_{0.8}Zn_{0.2}Fe₂O₄ | 19 | 3.9 | 1.5 | Permalloy | 4.1 | × | | 0 | 53 | 51 | 50 | 3 | 15 |
| A-45 | Ni_{0.4}Zn_{0.4}Fe_{2.2}O₄ | 33 | 2.6 | 1.5 | Ni | 3.5 | × | | 0 | 55 | 52 | 50 | 2 | 20 |
| A-46 | Ni_{0.8}Zn_{0.2}Fe₂O₄ | 25 | 2.8 | 1.1 | Ni | 0.9 | Si | Na | 0.4 | 55 | 53 | 50 | 1 | 5 |
| A-47 | Ni_{0.5}Zn_{0.4}Fe_{2.1}O₄ | 45 | 4.1 | 0.5 | Ni | 1.9 | Si, P | Mg, Ca | 7.2 | 51 | 50 | 50 | 2 | 0 |
| A-48 | Y₃Fe₅O₁₂ | 30 | 0.9 | 1.6 | Ni | 0.5 | Si, B | Ca, K | 8.6 | 64 | 62 | 63 | 3 | 0 |
| A-49 | Co_{1.5}Fe_{1.5}O₄ | 70 | 1.2 | 2.0 | Ni | 1.5 | Si, B, P | K | 0.1 | 67 | 66 | 64 | 1 | 5 |
| A-50 | Ni_{0.8}Zn_{0.2}Fe₂O₄ | 23 | 2.8 | 1.1 | Ni | 0.9 | Si | Na | 0.5 | 48 | 45 | 41 | 1 | 0 |
| A-51 | Ni_{0.6}Zn_{0.3}Fe_{2.1}O₄ | 45 | 4.1 | 0.5 | Ni | 1.9 | Si, P | Mg, Ca | 2.1 | 43 | 41 | 39 | 2 | 0 |
| A-52 | Y₃Fe₅O₁₂ | 30 | 0.9 | 1.6 | Ni | 0.5 | Si, B | Ca, K | 4.6 | 51 | 50 | 48 | 3 | 5 |
| A-53 | Mg_{0.8}Fe_{2.2}O₄ | 70 | 1.2 | 2.0 | Ni | 1.5 | Si, B, P | K | 6.5 | 56 | 54 | 53 | 1 | 0 |

**TABLE 4**

| No. | Configurations | | | | | | | | | Evaluation items | | | | |
|---|---|---|---|---|---|---|---|---|---|---|---|---|---|---|
| | Magnetic region | | | | Conductive substance | Fe content difference (wt%) | Si B P | Alkali | | Noise evaluation | | | | Vibration test |
| | Composition | Primary particle size (µm) | Porosity (%) | Secondary particle size (µm) | | | | Element | Content (wt%) | 30 MHz (dB) | 100 MHz (dB) | 300 MHz (dB) | Noise variation (dB) | NG rate (%) |
| B-1 | MgFe₂O₄ | 0.4 | 1.5 | 1.5 | Ni | 52 | × | | 0 | 84 | 81 | 79 | 6 | 25 |
| B-2 | Mg_{0.7}Zn_{0.2}Fe_{2.1}O₄ | 110 | 5.5 | 1.5 | Ni | 6.1 | × | | 0 | 80 | 79 | 79 | 8 | 30 |
| B-3 | MnFe₂O₄ | 70 | 5.2 | 1.5 | Ni | 6.5 | × | | 0 | 85 | 84 | 81 | 11 | 25 |
| B-4 | CuFe₂O₄ | 40 | 2.4 | 0.1 | Ni | 4.6 | × | | 0 | 80 | 80 | 76 | 3 | 20 |
| B-5 | Cu_{0.8}Zn_{0.3}Fe_{1.9}O₄ | 31 | 1.9 | 2.1 | Ni | 5.3 | × | | 0 | 70 | 68 | 69 | 7 | 30 |
| B-6 | Mg_{0.8}Zn_{0.8}Fe_{1.4}O₄ | 25 | 1.6 | 1.5 | Ni | 5.2 | × | | 0 | 88 | 87 | 89 | 9 | 35 |
| B-7 | FeO | 12 | 3.5 | 1.5 | Ni | 6.2 | × | | 0 | 94 | 91 | 90 | 15 | 25 |
| B-8 | Fe₂O₃ | 65 | 3.7 | 1.5 | Ni | 5.8 | × | | 0 | 93 | 90 | 91 | 11 | 25 |
| B-9 | BaFe₁₂O₁₉ | 19 | 4.1 | 1.5 | Ni | 4.2 | × | | 0 | 90 | 91 | 88 | 3 | 25 |
| B-10 | Mg_{0.8}Zn_{0.1}Fe_{2.1}O₄ | 0.3 | 6.8 | 1.5 | Ni | 4.1 | × | | 0 | 91 | 89 | 88 | 4 | 30 |
| B-11 | Y₃Fe₅O₁₂ | 120 | 8.1 | 1.5 | Ni | 6.0 | × | | 0 | 93 | 91 | 92 | 8 | 20 |
| B-12 | Co₃Fe₂O₄ | 0.4 | 3.2 | 0.4 | Ni | 3.9 | × | | 0 | 92 | 90 | 87 | 2 | 20 |
| B-13 | Dy₃Fe₅O₁₂ | 105 | 5.9 | 2.3 | Ni | 3.8 | × | | 0 | 85 | 81 | 82 | 11 | 20 |
| B-14 | FeO | 0.3 | 1.3 | 1.5 | Ni | 5.5 | × | | 0 | 95 | 94 | 91 | 11 | 25 |
| B-15 | Ni_{0.8}Zn_{0.8}Fe_{1.4}O₄ | 130 | 2.6 | 1.5 | Ni | 5.4 | × | | 0 | 92 | 90 | 86 | 9 | 30 |
| B-16 | Co_{0.6}Zn_{0.4}Fe₂O₄ | 62 | 5.6 | 0.3 | Ni | 6.3 | × | | 0 | 89 | 88 | 88 | 8 | 25 |

**TABLE 5**

| No. | Configurations | | | | | | | | | Evaluation items | | | | |
|---|---|---|---|---|---|---|---|---|---|---|---|---|---|---|
| | Magnetic region | | | | Conductive substance | Fe content difference (wt%) | Si B P | Alkali | | Noise evaluation | | | | Vibration test |
| | Composition | Primary particle size (µm) | Porosity (%) | Secondary particle size (µm) | | | | Element | Content (wt%) | 30 MHz (dB) | 100 MHz (dB) | 300 MHz (dB) | Noise variation (dB) | NG rate (%) |
| B-17 | Ni_{0.8}Zn_{0.3}Fe_{1.9}O₄ | 14 | 7.9 | 2.2 | Ni | 6.2 | × | | 0 | 90 | 88 | 89 | 8 | 25 |
| B-18 | BaFe₁₂O₁₉ | 26 | 6.9 | 1.5 | Ni | 6.5 | × | | 0 | 96 | 95 | 95 | 9 | 30 |
| B-19 | Fe₂O₃ | 38 | 9.8 | 1.5 | Ni | 5.5 | × | | 0 | 98 | 96 | 94 | 12 | 25 |
| B-20 | BaFe₁₂O₁₉ | 16 | 4.3 | 0.3 | Ni | 5.6 | × | | 0 | 97 | 94 | 93 | 12 | 30 |
| B-21 | FeO | 68 | 4.9 | 2.6 | Ni | 5.1 | × | | 0 | 91 | 89 | 88 | 13 | 30 |
| B-22 | Dy₃Fe₅O₁₂ | 120 | 5.9 | 2.8 | Ni | 5.7 | × | | 0 | 92 | 87 | 89 | 11 | 35 |
| B-23 | CuFe₂O₄ | 0.4 | 5.1 | 0.4 | Ni | 5.6 | × | | 0 | 95 | 90 | 89 | 12 | 40 |
| B-24 | SrFe₁₂O₁₉ | 0.3 | 6.7 | 1.5 | Ni | 6.7 | × | | 0 | 99 | 94 | 96 | 10 | 30 |
| B-25 | Fe₂O₃ | 110 | 8.8 | 1.5 | Ni | 5.9 | × | | 0 | 97 | 91 | 94 | 10 | 35 |
| B-26 | PbFe₁₂O₁₉ | 0.4 | 4.1 | 0.4 | Ni | 6.0 | × | | 0 | 101 | 97 | 95 | 7 | 35 |
| B-27 | Ni_{0.9}Zn_{0.8}Fe_{1.3}O₄ | 130 | 4.6 | 2.2 | Ni | 5.7 | × | | 0 | 92 | 91 | 89 | 7 | 30 |
| B-28 | FeO | 30 | 4.2 | 0.4 | Ni | 5.7 | × | | 0 | 96 | 95 | 92 | 6 | 25 |
| B-29 | BaFe₁₂O₁₉ | 38 | 4.6 | 2.1 | Ni | 5.9 | × | | 0 | 95 | 92 | 90 | 8 | 25 |
| B-30 | Fe₂O₃ | 0.4 | 6.9 | 0.4 | Ni | 6.0 | × | | 0 | 93 | 90 | 93 | 8 | 25 |
| B-31 | PbFe₁₂O₁₉ | 105 | 8.4 | 2.1 | Ni | 6.1 | × | | 0 | 100 | 98 | 94 | 9 | 20 |

In the evaluation tests, 84 kinds of samples numbered A-1 to A53 and B-1 to B-31 were evaluated. A plurality of samples produced under the same conditions were used as samples of the same kind in order to identify the relationships of the after-mentioned plurality of parameters and the plurality of evaluation test results. The sample number, the configurations of the composite part 200 and the evaluation test results of the respective samples are listed in TABLES 1 to 5. The configurations of the magnetic region 830, the composition of the conductive substance (conductive region 820), the iron content difference, the kind of the element Si, B, P contained in the ceramic region 81, the kind and amount of the alkali metal element contained in the composite part 200 are presented as the configurations of the samples. The composition of the iron-containing oxide contained in the magnetic region 830, the primary particle size (i.e. the average particle size of the primary particles), the porosity (i.e. the porosity of the secondary particles (magnetic particle areas 835)) and the secondary particle size (i.e. the average particle size of the secondary particles) are presented as the configurations of the magnetic region 830. The results of noise evaluation test and vibration test are presented as the results of the evaluation tests.

The composition of the iron-containing oxide was determined by ICP (Inductively Coupled Plasma) analysis, X-ray diffraction (XRD) and EPMA (Electron Probe Micro Analyser). In the tables, only the composition of the iron-containing oxide is indicated for each sample. In fact, however, various impurities could be contained in trace amounts in the magnetic region 830 during the process of sample production.

The primary particle size (i.e. the average particle size of the primary particles) was determined as follows. In each sample, the composite part 200 was cut along a plane including the center axis CL as explained above with reference to FIG. 2. The resulting cross section of the composite part 200 was processed by mirror polishing and by thermal etching treatment. Chemical etching treatment may be performed in place of the thermal etching treatment. The processed cross section of the composite part 200 was observed by SEM (scanning electron microscope). Herein, the accelerating voltage of the SEM was set to 15 kV; and the working distance of the SEM was set to within the range of 10 mm to 12 mm. The thus-obtained SEM image was analyzed according to the following procedure so as to determine the average particle size of the primary particles.

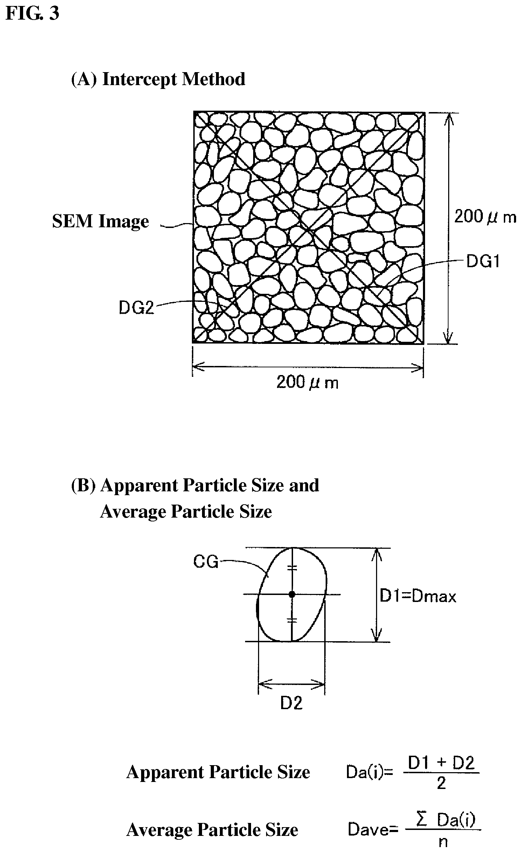

FIG .3 is a schematic view showing how to determine the average particle size. The cross section was observed at ten points by the SEM (scanning electron microscope) with a rectangular field of view of 200 µm × 200 µm. FIG. 3(A) shows a state of crystalline particles observed in the SEM image. The SEM image was binarized by an image analysis software ("Analysis Five" available from Soft Imaging System GmbH). The binarization threshold was set as follows. (1) Among the SEM image, the secondary electron image and the reflected electron image were verified; and lines were drawn along dark-colored boundaries (corresponding to particle boundaries) on the reflected electron image so as to specify the positions of the particle boundaries. (2) The reflected electron image was improved by smoothening the reflected electron image while maintaining the edges of the particle boundaries. (3) A graph was obtained from the reflected electron image, with lightness on the horizontal axis and frequency on the vertical axis. As the obtained graph had two peaks, the lightness at the midpoint between these two peaks was set as the binarization threshold.

In the SEM image, the phase of the primary particles was distinguished from the other phase by EPMA. The apparent particle size Da(i) of the primary particles was measured by the following intercept method.

In the intercept method, the primary particles intersecting at least either one of two diagonal lines DG1 and DG2 of the SEM image were selected (see FIG. 3(A)). The maximum diameter Dmax of each of the selected primary particles CG was measured as a longer diameter D1 (see FIG. 3(B)). Herein, the maximum diameter Dmax was defined as a maximum value among outer diameters of the primary particle CG as measured in all directions. Further, the outer diameter of the primary particle CG along a straight line passing through the midpoint of the longer diameter D1 and extending perpendicular to the longer diameter D1 was measured as a shorter diameter D2. The average value of the longer and shorter diameters D1 and D2 was calculated. This average value (D1 + D2)/2 was determined as the apparent particle size Da(i) of the primary particle CG. The expression "(*i*)" means that the value was of the *i*-th primary particle CG. The average particle size Dave was determined by calculating the average of the apparent particle size values Da(*i*) of the *n* number of primary particles intersecting at least one of the diagonal lines DG1 and DG2. In view of the fact that some differences occur in the average particle size Dave depending on the SEM images in the intercept method, the average of the particle size values determined from ten SEM images was utilized as the average particle size Dav.

The secondary particle size (i.e. the average particle size of the secondary particles) was determined as follows. A portion of the cross section of the composite part 200, including the target section 800 of 2 mm × 3 mm as explained above with reference to FIG. 2, was observed by scanning electron microscope (SEM). The thus-obtained SEM image was binarized in the same manner as in the determination of the primary particle size; and the phase of the secondary particles was distinguished from the other phase. At this time, one continuous area surrounded by the conductive region 820 was identified as one secondary particle (magnetic particle area 835). Then, the areas of the plurality of secondary particles in the target section 800 of 2 mm × 3 mm were calculated. Using these calculated areas, approximate diameters Dc (see FIG. 2) of the plurality of secondary particles (i.e. the magnetic particle area 835) were respectively determined. The average of the approximate diameter values Dc of the plurality of secondary particles was utilized as the secondary particle size.

The porosity was defined as the ratio of the area of the pores 832 to the area of the secondary particle (including the area of the pores 832 (see FIG. 2)). The area of the secondary particle was calculated in the same manner as in the determination of the secondary particle size. The area of the pores 832 was calculated by identifying the pores 835 in the magnetic particle area 835 (i.e. the areas of clearances between the plurality of primary particles) according to the method explained for the determination of the primary particle size. The average of the porosity values of the plurality of secondary particles in the 200 µm × 200 µm field of the cross section was utilized as the porosity.

The conductive material contained in the powder material of the composite part 200 is indicated as the conductive substance (i.e. the composition of the conductive region 820) in the respective tables. The composition of the conductive substance may be identified by any analytical means such as micro X-ray diffraction.

The iron content difference was defined as the difference in iron content between an inner zone and an outer peripheral zone of the secondary particle. The inner and outer peripheral zones are schematically shown in the lower-right side of FIG. 2. In this schematic view, one secondary particle (magnetic particle area 835) on the cross section of the composite part 200 is shown in enlargement. The inner zone 835i refers to a zone located a first distance dti or more from the surface 835s of the secondary particle in the cross section of the composite part 200. The first distance dti was herein set to 100 µm. The outer peripheral zone 835 refers to a zone located a second distance dto or less from the surface 835 of the secondary particle in the cross section of the composite part 200. The second distance dto was herein set to 50 µm. The surface 835s of the magnetic particle area 835 refers to a boundary between the magnetic particle area 830 and the coating area 825, that is, a boundary between the magnetic region 830 and the conductive region 820.

More specifically, the iron content difference was given as an absolute value of the difference between the iron content of the inner zone 835i and the iron content of the outer peripheral zone 835o as measured at the cross section of the composite part 200 shown in FIG. 2. The iron content was identified, as the amount of iron as expressed in terms of oxide (e.g. Fe₂O₃), by EPMA. Herein, the unit of the iron content is percent by weight. In the respective tables, the average of ten iron content difference values determined from ten secondary particles is indicated. As the iron content difference value of each secondary particle, an absolute value of the difference between the average of five iron content values measured at five points in the inner zone 835i and the average of five iron content values measured at five points in the outer peripheral zone 835o was utilized.

In the respective tables, any of Si, B and P contained in the ceramic region 810 is indicated in the column of "Si (silicon), B (boron), P (phosphorus)". Herein, the symbol " × " is indicated in the column of "Si, B, P" in the case where none of Si, B and P was contained in the ceramic region 810. The element Si, B, P contained in the ceramic region 810 was identified from the components of the powder material of the ceramic region 810. The element contained in the ceramic region 810 may alternatively be identified by any analytical means such as EPMA.

The kind of the alkali metal element contained in the composite part 200 is indicated in the column of "Alkali" under the heading of "Element" in the respective tables. The "Element" column is left blank in the case where no alkali metal was contained in the composite part 200. The alkali metal element contained in the composite part 200 was identified from the alkali metal component of the material of the composite part 200. The alkali metal element contained in the composite part 200 may alternatively be identified by any analytical means such as ICP analysis, X-ray diffraction or EPMA.

The amount of the alkali metal element contained in the composite part 200 is indicated in the column of "Alkali" under the heading of "Content" in the respective tables. Herein, the amount of the alkali metal contained in terms of alkali metal oxide (J₂O (where J is alkali metal)) is indicated as the content. The unit of this content value is percent by weight. In the case where a plurality of kinds of alkali metals were contained in the composite part 200, the sum of the amounts of the alkali metals contained is indicated as the content in the respective tables. The amount of the alkali metal element contained in the composite part 200 was identified by ICP analysis.

The noise evaluation test was carried out by measuring the intensity of noise according to "Motorcycles - Radio Noise Characteristics - Second Part, Measuring Method of Prevention Device, Current Method" of JASO D-002-2 (Japan Society of Automotive Engineers transmission standard D-002-2). More specifically, the distance of the gap *g* in the spark plug sample was adjusted to 0.9 mm ± 0.01 mm. Discharge was induced by applying a voltage of 13 kV to 16 kV to the sample. During the discharge, the amount of current flowing through the metal terminal 40 was measured by the use of a current probe. The measured current value was converted to dB for comparison purposes. Herein, noises of three frequencies: 30 MHz, 100 MHz and 300 MHz were measured as the noise. Each numerical value indicated in the respective tables is indicative of the intensity of the noise relative to a predetermined reference level as determined as the average value of five measurement results. The higher the numerical value, the stronger the noise. Further, a difference between the maximum and minimum values, among the 100-MHz noise measurement results of ten samples, is indicated as the noise variation in the respective tables. The smaller the difference (i.e. noise variation), the more stable the noise suppression effect.

The vibration test was carried out in accordance with "Impact Resistance Test", paragraph 7.4 of JIS B 8031. In this evaluation test, each sample was mounted on an impact resistance test machine and tested by applying an impact to the sample with a stroke of 22 mm for 60 minutes at a rate of 400 times per minute. After the impact resistance test, the electrical conduction between the center electrode 20 and the metal terminal 40 was checked. The above test operation was performed on twenty samples. The rate of the samples in which the electrical conduction was not detected (i.e. in which disconnection occurred), out of the twenty samples, was determined and indicated as NG rate (in units of %) in the respective tables. The lower the NG rate, the higher the impact resistance.

### B-1. Sample Configurations

In the samples No. A-1 to A-53, the composition of the iron-containing oxide was any of the following as indicated in TABLES 1 to 3.
[Type-1 Iron-containing Oxides] MnFe₂O₄, NiFe₂O₄, CuFe₂O₄, ZnFe₂O₄, CoFe₂O₄, FeFe₂O₄, MgFe₂O₄, Cu_{0.5}Fe_{2.5}O₄, Mg_{0.8}Fe_{2.2}O₄, Mn_{0.6}Zn_{0.3}Fe_{2.1}O₄, Co_{1.5}Fe_{1.5}O₄, Ni_{0.25}Zn_{0.75}Fe₂O₄, Ni_{0.7}Zn_{0.8}Fe_{1.5}O₄, N_{0.8}Zn_{0.2}Fe₂O₄, Ni_{0.3}Zn_{0.7}Fe₂O₄, Ni_{0.8}Zn_{0.7}Fe_{1.5}O₄, Ni_{0.3}Zn_{0.2}Fe_{2.5}O₄, Ni_{0.4}Zn_{0.4}Fe_{2.2}O₄, Ni_{0.5}Zn_{0.4}Fe_{2.1}O₄, Ni_{0.6}Zn_{0.3}Fe_{2.1}O₄
[Type-2 Iron-containing Oxides] Y₃Fe₅O₁₂, Dy₃Fe₅O₁₂, Lu₃Fe₅O₁₂, Yb₃Fe₅O₁₂, Tm₃Fe₅O₁₂, Er₃Fe₅O₁₂, Ho₃Fe₅O₁₂, Tb₃Fe₅O₁₂, Gd₃Fe₅O₁₂, Sm₃FeₛO₁₂
The above type-1 iron-containing oxides are also called spinel ferrite. The above type-2 iron-containing oxides are also called garnet ferrite.

In samples No. A-1 to A-53 where the composition of the type-1 iron-containing oxide was represented by M_{1+A}OFe_{2-A}O₃, the element M was one kind or two kinds selected from Mn, Ni, Cu, Zn, Co, Fe and Mg. Further, the value A was -0.5, -0.2, -0.1,0 or +0.5, that is, within the range of -0.5 to 0.5.

In the samples No. A-1 to A-53 where the composition of the type-2 iron-containing oxide was represented by Q₃Fe₅O₁₂, the element M was either one kind selected from Y, Dy, Lu, Yb, Tm, Er, Ho, Tb, Gd and Sm.

In particular, the composition of the iron-containing oxide used in the samples No. A-18 to A-23 was of the type-1 iron-containing oxide in which the content ratio values of at least two among a plurality of elements other than oxygen (O) were not integers. The composition of the iron-containing oxide used in the samples No. A-24 to A-35 was NiFe₂O₄. The composition of the iron-containing oxide used in the samples No. A-36 to A-40 was of the type-1 iron-containing oxide containing Ni, Zn and Fe.

As mentioned above, various type-1 iron-containing oxides represented by M_{1+A}OFe_{2-A}O₃ and various type-2 iron-containing oxides represented by Q₃Fe₅O₁₂ were used in the samples.

The other parameters of the samples No. A-1 to A-53 were set to within the following ranges: 0.5 µm ≤ primary particle size ≤ 100 µm; 0.8% ≤ porosity ≤ 5.0%; 0.5 mm ≤ secondary particle size ≤ 2.0 mm; and 0.5 wt% ≤ iron content difference ≤ 8.1 wt%. The conductive region 820 was of either of Ni, C, Cu, LaMnO₃, TiC, Inconel (trademark) or Permalloy.

In the samples No. B-1 to B-31, the composition of the iron-containing oxide was any of the following as indicated in TABLES 4 and 5.
[Iron Oxide] FeO, Fe₂O₃,
[Type-1 Iron-containing Oxides] MgFe₂O₄, M_{90.7}Zn_{0.2}Fe_{2.1}O₄, MnFe₂0₄, CuFe₂O₄, Cu_{0.8}Zn_{0.3}Fe_{1.9}O₄, Mg_{0.8}Zn_{0.8}Fe_{1.4}O₄, Mg_{0.8}Zn_{0.1}Fe_{2.1}O₄, CoFe₂O₄, Ni_{0.8}Zn_{0.8}Fe_{1.4}O₄, CO_{0.6}Zn_{0.4}Fe₂O₄, Ni_{0.8}Zu_{0.3}Fe_{1.9}O₄, Ni_{0.9}Zn_{0.8}Fe_{1.3}O₄
[Type-2 Iron-containing Oxides] Y₃Fe₅O₁₂, Dy₃Fe₅O₁₂
[Type-3 Iron-Containing Oxides] BaFe₁₂O₁₉, SrFe₁₂O₁₉, PbFe₁₂O₁₉
The above type-3 iron-containing oxides are also called hexagonal ferrite.

### B-2. Primary Particle Size

The primary particle size of the samples No. A-1 to A-35 (see TABLES 1 and 2) was in the range of 0.5 µm to 100 µm. These samples No. A-1 to A-35 had a sufficiently low noise intensity of 70 dB or lower at all frequencies. The other parameters of the samples No. A-1 to A-35 were within the following ranges: 0.8% ≤ porosity ≤ 5.0%; 0.5 wt% ≤ iron content difference ≤ 8.1 wt%; noise variation ≤ 13 dB; and NG rate ≤ 30%. The conductive region 820 was of either of Ni, Inconel, Cu, LaMnO₃, C or TiC. Any of Si, B, P and alkali metal was not contained in the composite part 200.

As shown in TABLE 4, the primary particle size of the sample No. B-1 was 0.4 µm and was smaller than that of the samples No. A-1 to A-35. This sample No. B-1 had a noise intensity of 84 dB (30 MHz), 81 dB (100 MHz) or 79 dB (300 Mz), which was higher than that of any of the samples No. A-1 to A-35 at the same frequency level. The reason for such a difference in noise intensity is assumed to be the influence of the primary particle size because the other configurations of the sample No. B-1 were similar to those of the samples No. A-1 to A-35 as shown in TABLE 4. When the size of the primary particles is small, the primary particles tend to have a single-domain structure. As the single-domain magnetic substance shows no energy loss caused due to domain wall motion, the noise attenuation effect of the single-domain magnetic substance becomes weak.

As in the case of the sample No. B-1, the primary particle size of the samples No. B-10, B-12, B-14, B-23, B-24, B-26 and B-30 (each 0.4 µm or smaller) was smaller than that of the samples No. A-1 to A-35 as shown in TABLES 4 and 5. Those samples had a noise intensity higher than that of any of the samples No. A-1 to A-35 at the same frequency level. As explained above, it has been shown by the plurality of samples that the noise became strong when the primary particle size was smaller than that of the samples No. A-1 to A-35.

As shown in TABLE 4, the primary particle size of the sample No. B-2 was 110 µm and was larger than that of the samples No. A-1 to A-35. This sample No. B-2 had a noise intensity of 80 dB (30 MHz), 79 dB (100 MHz) or 79 dB (300 Mz), which was higher than that of any of the samples No. A-1 to A-35 at the same frequency level. The reason for such a difference in noise intensity is assumed to be the influence of the primary particle size because the other configurations of the sample No. B-2 were similar to those of the samples No. A-1 to A-35 as shown in TABLE 4. It is assumed that, when the size of the primary particles is large, the porosity becomes high so that partial discharge is likely to occur to cause strong noise.

As in the case of the sample No. B-2, the primary particle size of the samples No. B-11, B-13, B-15, B-22, B-24, B-27 and B-31 (each exceeding 100 µm) was larger than that of the samples No. A-1 to A-35 as shown in TABLES 4 and 5. Those samples had a noise intensity higher than that of any of the samples No. A-1 to A-35 at the same frequency level. As explained above, it has been shown by the plurality of samples that the noise became strong when the primary particle size was larger than that of the samples No. A-1 to A-35.

The samples No. A-1 to A-35, in which the primary particle diameter was set to 0.5, 10, 18, 19, 20, 21, 22, 23, 24, 25, 26, 27, 28, 29, 30, 45, 46, 50 or 100 (µm), had a favorable noise intensity. The preferable range (upper and lower limits) of the primary particle size can be thus determined based on the above nineteen values. It is feasible to use any arbitrary one of the above nineteen values as the lower limit of the preferable range of the primary particle size. It is feasible to use, as the upper limit of the preferable range of the primary particle size, any arbitrary one of the above values larger than the lower limit value. For example, the preferable range of the primary particle size may be from 0.5 µm to 100 µm. The primary particle size can be adjusted by any method, e.g. by controlling the particle size of the powder of the iron-containing oxide.

### B-3. Porosity

The porosity of the samples No. A-1 to A-35 (see TABLES 1 and 2) was in the range of 0.8% to 5.0%. On the other hand, the porosity of the samples No. B-3, B-16, B-17, B-18 and B-19 was higher than that of the samples No. A-1 to A-35 and each exceeded 5.0% as shown in TABLES 4 and 5. Each of these five high-porosity samples had a noise intensity of 81 dB or higher at all frequencies, which was higher than that of any of the samples No. A-1 to A-35 at the same frequency level. The reason for such a difference in noise intensity is assumed to be the influence of the porosity because the other configurations of the samples No. B-3, B-16, B-17, B-18 and B-19 were similar to those of the samples No. A-1 to A-35 as shown in TABLES 4 and 5. It is assumed that, when the porosity is high, partial discharge is likely to occur to cause strong noise.

The samples No. A-1 to A-35, in which the porosity was set to 0.8, 1.5, 2.0, 2.1, 2.5, 3.3, 3.4, 3.5, 3.6, 3.7, 3.8, 3.9, 4.0, 4.5 or 5.0 (%), had a favorable noise intensity. The preferable range (upper and lower limits) of the porosity can be thus determined based on the above fifteen values. It is feasible to use any arbitrary one of the above fifteen values as the lower limit of the preferable range of the porosity. It is feasible to use, as the upper limit of the preferable range of the porosity, any arbitrary one of the above values higher than the lower limit value. For example, the preferable range of the porosity may be from 0.8% to 5.0%. It is feasible to set the porosity to zero % because the lower the porosity, the less likely it is that partial discharge will occur. Thus, the preferable range of the porosity may be from 0% to 5.0%. The porosity can be adjusted by any method, e.g. by controlling the primary particle size (due to the fact that the larger the primary particle size, the higher the porosity) or by controlling the force applied to the powder material during forming of the composite part 200 (due to the fact that the stronger the force applied, the lower the porosity).

### B-4. Secondary Particle Size

The secondary particle size of the samples No. A-1 to A-35 (see TABLES 1 and 2) was 0.5, 1.5 or 2 (mm). On the other hand, the secondary particle size of the sample No. B-4 was 0.1 mm and was smaller than that of the samples No. A-1 to A-35. This sample No. B-4 had a noise intensity of 80 dB (30 MHz), 80 dB (100 MHz) or 76 dB (300 Mz), which was higher than that of any of the samples No. A-1 to A-35 at the same frequency level. The reason for such a difference in noise intensity is assumed to be the influence of the secondary particle size because the other configurations of the sample No. B-4 were similar to those of the samples No. A-1 to A-35 as shown in TABLE 4. The reason for increase of the noise intensity with decrease of the secondary particle size is assumed as follows. When the secondary particle size is small, a larger number of secondary particles are packed in the composite part 200 to develop a larger number of current conduction paths through the conductive region 820 around the secondary particles (magnetic particle areas 830) so that a flow of current is distributed in the composite part 200. As a consequence, the noise suppression effect of the magnetic particle areas 835 is lowered with decrease in current density.

As in the case of the sample No. B-4, the secondary particle size of the samples No. B-12, B-16, B-20, B-23, B-26, B-29 and B-30 (each smaller than or equal to 0.4 mm) was smaller than that of the samples No. A-1 to A-35 as shown in TABLES 4 and 5. Those samples had a noise intensity higher than that of any of the samples No. A-1 to A-35 at the same frequency level. As explained above, it has been shown by the plurality of samples that the noise became strong when the secondary particle size was smaller than that of the samples No. A-1 to A-35.

As shown in TABLE 5, the secondary particle size of the sample No. B-5 was 2.1 mm and was larger than that of the samples No. A-1 to A-35. This sample No. B-5 had a noise intensity of 70 dB (30 MHz), 68 dB (100 MHz) or 69 dB (300 Mz), which was equivalent to that of the samples No. A-1 to A-35. The noise intensity was at a favorable level even when the secondary particle size was larger than 2.0 mm.

When the secondary particle size is large, the filling property of the powder material of the composite part 20 into the axial hole 12 (see FIG. 1) is lowered. For example, the material of the ceramic region 810 may not be filled into some of the clearances between the plurality of composite particle areas 840 shown in FIG. 2. It is hence preferable that the secondary particle size is small for improvement in the productivity of the spark plug. The secondary particle size is preferably smaller than or equal to 2 mm, that is, the maximum secondary particle size among the samples No. A-1 to A-35.

The samples No. A-1 to A-35, in which the secondary particle size was set to 0.5, 1.5 or 2 (mm), had a favorable noise intensity. The preferable range (upper and lower limits) of the secondary particle size can be thus determined based on the above three values. It is feasible to use any arbitrary one of the above three values as the lower limit of the preferable range of the secondary particle size. It is feasible to use, as the upper limit of the preferable range of the secondary particle size, any arbitrary one of the above values larger than the lower limit value. For example, the preferable range of the secondary particle size may be from 0.5 mm to 2 mm. The secondary particle size can be adjusted by any method, e.g. by controlling the particle size of the power material (due to the fact that the larger the particle size of the powder material, the larger the secondary particle size) or by controlling the time for mixing the powder of the iron-containing oxide with the binder (due to the fact that the longer the mixing time, the larger the secondary particle size).

### B-5. Composition of Iron-containing Oxide

As mentioned above, the samples No. A-1 to A-35, which had a favorable noise intensity, were prepared using various iron-containing oxides represented by "M_{1+A}OFe_{2-A}O₃" or "Q₃Fe₅O₁₂" where the element M was one kind or two kinds selected from Mn, Ni, Cu, Zn, Co, Fe and Mg; the value A was in the range of -0.5 to 0.5; and the element M was either one kind selected from Y, Dy, Lu, Yb, Tm, Er, Ho, Tb, Gd and Sm.

The samples No. A-36 to A-40 shown in TABLE 3 were prepared using other various iron-containing oxides containing Ni, Zn and Fe. As shown in TABLE 3, the samples No. A-36 to A-40 had a low noise intensity of 55 dB or lower at all frequencies.

Since the other configurations of the samples No. A-36 to A-40 were similar to those of the samples No. A-1 to A-35 as shown in TABLE 3, the reason for a difference in noise intensity between these samples is assumed to be the influence of the composition of the iron-containing oxide. More specifically, the composition of the iron-containing oxide in the samples No. A-36 to A-40 was any of the following: Ni_{0.8}Zn_{0.2}Fe₂O₄, Ni_{0.3}Zn_{0.7}Fe₂O₄, Ni_{0.8}Zn_{0.7}Fe_{1.5}O₄, Ni_{0.3}Zn_{0.8}Fe_{2.5}O₄ and Ni_{0.4}Zn_{0.4}Fe_{2.2}O₄. When these compositions are represented by "Ni_{X}Zn_{Y}Fe_{Z}O₄", the combination of X, Y and Z is "0.8, 0.2 and 2", "0.3, 0.7 and 2", "0.8, 0.7 and 1.5", "0.3, 0.2 and 2.5" and "0.4, 0.4 and 2.2". Namely, the values X, Y and Z range as follows: 0.3 ≤ X ≤ 0.80, 0.2 ≤ Y ≤ 0.7 and 1.5 ≤ Z ≤ 2.5 (with the proviso that X + Y + Z = 3).

It is generally assumed that a plurality of kinds of oxides represented by Ni_{X}Zn_{Y}Fe_{Z}O₄ produce similar noise suppression effects when the content ratio of Ni, Zn and Fe is close to that of the above samples. It is thus possible to achieve a low noise intensity by the use of these oxides where the values X, Y and X are within the above respective ranges as in the case of the samples No. A-36 to A-40.

Hence, the iron-containing oxide preferably has a composition represented by "M_{1+A}OFe_{2-A}O₃" or "Q₃Fe₅O₁₂", more preferably "Ni_{X}Zn_{Y}Fe_{Z}O₄".

The samples No. B-6 to B-9 shown in TABLE 4 were prepared using other different iron-containing oxides. The composition of the iron-containing oxide in those samples was any of the following: Mg_{0.8}Zn_{0.8}Fe_{1.4}O₄, FeO, Fe₂O₃ and BaFe₁₂O₁₉. Those samples had a noise intensity of 87 dB or higher at an arbitrary frequency, which was higher than that of any of the samples No. A-1 to A-35 at the same frequency level. The composition of the iron-containing oxide in those samples was different from the above preferable composition range such as "M_{1+A}OFe_{2-A}O₃", "Q₃Fe₅O₁₂" or "Ni_{X}Zn_{Y}Fe_{Z}O₄". For example, the composition of the iron-containing oxide in the sample No. B-6 (Mg_{0.8}Zn_{0.8}Fe_{1.4}O₄) was represented by M_{1+A}OFe_{2-A}O₃ where the element M was Mg; and the value A was 0.6 and was larger than 0.5, that is, the upper limit value of the above preferable range (from -0.5 to 0.5). When the value A was out of the preferable range, a different phase was formed in the magnetic region 830 in addition to the phase of the magnetic substance. It is assumed that the noise suppression effect is lowered as a result of the formation of such a different phase.

Further, the composition of the iron-containing oxide in the samples No. B-14, B-15, B-18 to B-21 and B-24 to B31 was also different from the above preferable composition range. Those samples had a noise intensity of 86 dB or higher at an arbitrary frequency, which was higher than that of any of the samples No. A-1 to A-35 at the same frequency level.

In this way, the above preferable composition contributes to a favorable noise intensity as compared to the case of any other composition. The composition of the iron-containing oxide can be adjusted by any method, e.g. by controlling the component ratio of the powder material of the iron-containing oxide.

### B-6. Iron Content Difference

The iron content difference of the samples No. A-41 to A-45 (see TABLE 3) was in the range of 1.6 wt% to 5.0 wt% and was smaller than that of the samples No. A-1 to A-35. These samples No. A-41 to A-45 had a noise variation of 3 dB or smaller, which was smaller than that of the samples No. A-1 to A-35.

Since the other configurations of the samples No. A-41 to A-45 were similar to those of the samples No. A-1 to A-35 as shown in TABLE 3, the reason for such a difference in noise variation is assumed to be the influence of the iron content difference. The reason for decrease of the noise variation with decrease of the iron content difference is assumed as follows. When the iron content difference is small, i.e. when a variation in the distribution of iron inside the secondary particles (magnetic particle areas 835 (see FIG. 2)) is small, the degree of uneven distribution of the magnetic substance inside the secondary particles is decreased. It is consequently possible to reduce variations in the noise suppression effect of the magnetic substance between the plurality of current conduction paths through the coating areas 825 around the secondary particles and thereby possible to decrease the noise variation.

The samples No. A-41 to A-45, in which the iron content difference was set to 1.6, 2.4, 3.5, 4.1 or 5.0 (wt%), had a favorable noise variation. The preferable range (upper and lower limits) of the iron content difference can be thus determined based on the above five values. It is feasible to use any arbitrary one of the above five values as the lower limit of the preferable range of the iron content difference. It is feasible to use, as the upper limit of the preferable range of the iron content difference, any arbitrary one of the above values higher than the lower limit value. For example, the preferable range of the iron content difference may be from 1.6 wt% to 5.0 wt%. It is assumed that the smaller the iron content difference, the smaller the variations in the noise suppression effect of the magnetic substance between the plurality of current conduction paths, the smaller the noise variation. For this reason, it is preferable that the iron content difference is small. The iron content difference may be set to zero wt%. Namely, the preferable range of the iron content difference may be from zero wt% to 5.0 wt%. Although the composition of the conductive region 820 in the samples No. A-41 to A-45 was identified as Ni or Permalloy (sample No. A-44), the conductive region is however not limited to these conductive materials. It is assumed that other various kinds of conductive materials (such as Incornel, Cu, LaMnO₃, C and TiC) can also be used as in the case of the samples No. A-31 to A-35.

As shown in TABLE 3, the samples No. A-46 to A-53 also had a noise variation of 3 dB or smaller. The iron content difference of these samples was set to 0.5, 0.9, 1.5 or 1.9 (wt%). As explained above, it has been shown by the plurality of samples that the noise variation became small when the iron content difference was in the above preferable range.

The iron content difference can be adjusted by any method. For example, the iron content difference can be decreased by decreasing the size of the primary particles or by allowing the formation of the secondary particles to proceed gradually and slowly.

### B-7. Si, B, P and Alkali Metal

In the samples No. A-46 to A-53, any of Si, B and P and the alkali metal were contained in the composite part 200 as shown in TABLE 3. The combination of the elements contained in each sample was as follows: Si and Na in the sample No. A-46; Si, P, Mg and Ca in the sample No. A-47; Si, B, Ca and K in the sample No. A-48, Si, B, P and K in the sample No. A-49; Si and Na in the sample No. A-50; Si, P, Mg and Ca in the sample No. A-51; Si, B, Ca, K in the sample No. A-52; and Si, B, P and K in the sample No. A-53. These samples had a NG rate of 5% or lower, which was lower than that of the samples No. A-1 to A-35, and had a noise intensity of 67 dB or lower at all frequencies.

Since the other configurations of the samples No. A-46 to A-53 were similar to those of the samples No. A-1 to A-35 as shown in TABLE 3, the reason for a difference in NG rate between these samples is assumed to be the influence of the elements contained in the composite part 200. When any of Si, B and P and alkali metal are contained in the composite part 200, a low-melting phase is formed during sintering of the composite part 200. As a result, the composite part 200 is closely packed so as to improve the durability (more specifically, impact resistance) of the composite part 200 and to prevent fine pores from remaining in the sintered composite part 200. The noise suppression effect is enhanced with decrease in the amount of the capacity component derived from the fine pores. Furthermore, the noise is suppressed as the occurrence of partial discharge in the fine pores is prevented.

For improvement in impact resistance, the combination of any of Si, B and P and the alkali metal is not limited to the above examples. It is assumed that these elements can also be used in any other combinations. It is generally preferable to contain at least one of Si, B and P in the ceramic region 810 and contain at least one kind of alkali metal component in the composite part 200.

### B-8. Alkali Metal Content

The alkali metal content of the samples No. A-50 to A-53 (see TABLE 3) was set to 0.5, 2.1, 4.6 or 6.5 (wt%) and was higher than that of the sample No. A-46, A-49 (0.1 wt%, 0.4 wt%) and lower than that of the sample No. A-47, A-48 (7.2 wt%, 8.6 wt%).

As seen from comparison of the samples No. A-50 and A-46, the noise intensity was increased as follows with decrease of the alkali metal content from 0.5 wt% to 0.4 wt%. The noise intensity was increased from 48 dB to 55 dB at 30 MHz, from 45 dB to 53 dB at 100 MHz and from 41 dB to 50 dB at 300 MHz. It is assumed that: when the alkali metal content is excessively low, fine pores tend to remain in the sintered composite part 200; and the noise suppression effect is lowered as a result of the occurrence of such pores.

As seen from comparison of the samples No. A-53 and A-48, the noise intensity was increased as follows with increase of the alkali metal content from 6.5 wt% to 8.6 wt%. The noise intensity was increased from 56 dB to 64 dB at 30 MHz, from 54 dB to 62 dB at 100 MHz and from 53 dB to 63 dB at 300 MHz. It is assumed that: when the alkali metal content is excessively high, a reaction phase is formed by the alkali metal and the iron-containing oxide during sintering of the composite part 200; and the noise suppression effect is lowered as a result of the formation of such a reaction phase.

The samples No. A-50 to A-53, in which the alkali metal content was in the range of 0.5 wt% to 6.5 wt%, had a favorable noise intensity. More specifically, the noise intensity was favorable in the samples No. A-50 to A-53 in which the alkali metal content was set to 0.5, 2.1, 4.6 or 6.5 (wt%). The preferable range (upper and lower limits) of the alkali metal content can be thus determined based on the above four values. It is feasible to use any arbitrary one of the above four values as the lower limit of the preferable range of the alkali metal content. It is feasible to use, as the upper limit of the preferable range of the alkali metal content, any arbitrary one of the above values higher than the lower limit value. For example, the preferable range of the alkali metal content may be from 0.5 wt% to 6.5 wt%. The alkali metal content can be adjusted by any method, e.g. by controlling the amount of alkali metal component added to the powder material of the composite part 200.

The "primary particle size", the "porosity", the "secondary particle size", the "composition of the iron-containing oxide", the "iron content difference", "Si, B, P and alkali metal" and the "alkali metal content" have been explained above as the preferable configurations. These seven preferable configurations can be combined with each other. One or more of these seven preferable configurations can be selected arbitrary as the configurations of the composite part 200.

### C. Modification Examples

(1) In the case where the composition of the iron-containing oxide contained in the magnetic region 830 is represented by M_{1+A}OFe_{2-A}O₃, various combinations of the element M and the value A can be used in place of those used in the above samples. The element M is not limited to those of the above samples. The element M can be at least one kind selected from Mn, Fe, Co, Ni, Cu, Mg, Zn and Ca. In the case where two or more kinds of elements are used as the element M, the total ratio of these elements is set to "1+A". The value A can be any arbitrary value ranging from -0.5 to 0.5.
(2) In the case where the composition of the iron-containing oxide contained in the magnetic region 830 is represented by Q₃Fe₅O₁₂, two or more kinds selected from Y, Lu, Yb, Tm, Er, Ho, Dy, Tb, Gd and Sm may be used as the element Q. In either case, the total ratio of all elements used as the element Q is set to "3".
(3) It is preferable to use at least one of the above preferred oxide compounds represented by M_{1+A}OFe_{2-A}O₃ and Q₃Fe₅O₁₂ as the iron-containing oxide of the magnetic region 830. It is particularly preferable that the iron-containing oxide of the magnetic region 830 includes an iron-containing oxide represented by Ni_{X}Zn_{Y}Fe_{Z}O₄ (where 0.3 ≤ X ≤ 0.8; 0.2 ≤ Y ≤ 0.7; 1.5 ≤ Z ≤ 2.5; and X + Y + Z = 3). The magnetic region 830 may include two or more kinds of iron-containing oxides. For example, it is feasible to include both of the iron-containing oxide represented by M_{1+A}OFe_{2-A}O₃ and the iron-containing oxide represented by Q₃Fe₅O₁₂ in the magnetic region 83.
(4) As the conductive material for formation of the conductive region 820 of the composite part 200, any of the conductive materials used in the above samples No. A-1 to A-53 of favorable noise intensity (such as Ni, Inconel, Cu, LaMnO₃, C, TiC and Permalloy) can be arbitrarily selected and used. It is assumed that not only these conductive materials but also other various conductive materials are usable. As the material for the conductive region 820, for example, it is feasible to use a material containing at least one of a metal, carbon, a carbon compound and a perovskite oxide. The metal can be at least one metal arbitrarily selected from Ag, Cu, Ni, Sn, Fe, Cr, Inconel, Sendust, Permalloy etc. The carbon compound can be at least one compound arbitrarily selected from Cr₃C₂, TiC etc. The perovskite oxide can be at least one compound arbitrarily selected from LaMnO₃, SrTiO₃, SrCrO₃ etc. The conductive material for the conductive region 820 may contain a plurality of kinds of conductive materials. In general, it is possible by the use of the conductive material having an electrical resistance of 50 Ω·m to suppress deterioration caused by heat generation due to the flow of large electric current.
(5) In the composite part 200, the ceramic material is provided to support the conductive material and the magnetic substance (that is, iron-containing oxide). There can be used various kinds of ceramic materials to support the conductive material and the magnetic substance. For example, it is feasible to use an amorphous ceramic material. The amorphous ceramic material may be in the form a glass containing one or more components arbitrarily selected from SiO₂, B₂O₅ and P₂O₅. It is alternatively feasible to used a crystalline ceramic material. The crystalline ceramic material may be in the form of a crystallized glass (also called glass ceramic) such as Li₂O-Al₂O₃-SiO₂ glass. As another alternative, there can be used a ceramic material free of Si, B and P.
(6) It is feasible to form the composite part 200 by any other method other rather than by placing and sintering the material of the composite part 200 in the though hole 12 of the insulator 10. For example, the composite part 200 can alternatively be formed by the following procedure. The material of the composite part 200 is formed into a cylindrical column shape by means of a forming die. The resulting formed body is sintered, thereby providing the composite part 200 in sintered cylindrical column form. Then, the powder material of the first seal part 600, the sintered composite part 200 rather than the powder material of the composite part 200, and the powder material of the second seal part 200 are put into the through hole 12 of the insulator 10 as the materials of the connection structure 300. The connection structure (e.g. the connection structure 200 of FIG. 1) is produced by inserting the metal terminal 40 into the though hole 12 from the rear opening 14 while heating the insulator.
(7) The configurations of the spark plug is not limited to those of FIG. 1. For example, at least either one of the first tip 29 and the second tip 39 may be omitted. The distal end portion of the ground electrode 30 may be opposed to the outer circumferential surface of the center electrode 20 so as to define the gap *g* therebetween.

Although the present invention has been described with reference to the above specific embodiment and modification examples, the above embodiment and modification examples are intended to facilitate understanding of the present invention and are not intended to limit the present invention thereto. Various changes and modifications can be made without departing from the scope of the present invention. The present invention includes equivalents thereof.

### Description of Reference Numerals

- 5:: Gasket
- 6:: First rear packing
- 7:: Second rear packing
- 8:: Front packing
- 9:: Talc
- 10:: Insulator
- 11:: Second outer-diameter decreasing portion
- 12:: Through hole (Axial hole)
- 13:: Leg portion
- 14:: Rear opening
- 15:: First outer-diameter decreasing portion
- 16:: Inner-diameter decreasing portion
- 17:: Front body portion
- 18:: Rear body portion
- 19:: Large diameter portion
- 20:: Center electrode
- 21:: Outer layer
- 22:: Core
- 27:: Electrode shaft
- 28:: Flange portion
- 29:: First tip
- 30:: Ground electrode
- 31:: Distal end portion
- 35:: Base
- 36:: Core
- 37:: Electrode shaft
- 39:: Second tip
- 40:: Metal terminal
- 41:: Cap attachment portion
- 42:: Collar portion
- 43:: Leg portion
- 50:: Metal shell
- 51:: Tool engagement portion
- 52:: Thread portion
- 53:: Crimp portion
- 54:: Seat portion
- 55:: Body part
- 56:: Inner-diameter decreasing portion
- 58:: Deformation portion
- 59:: Through hole
- 60:: First seal part
- 80:: Second seal part
- 100:: Spark plug
- 200:: Composite part
- 300:: Connection structure
- 800:: Target section
- 810:: Ceramic region
- 820:: Conductive region
- 825:: Coating area
- 830:: Magnetic region
- 832:: Pore
- 835:: Particle area (Magnetic particle area)
- 835c:: Imaginary circle
- 835i:: Inner zone
- 835o:: Outer peripheral zone
- 835s:: Surface
- 840:: Composite particle area
- 900:: Cross section
- *g*:: Gap
- SP:: Space
- CL:: Center axis (Axis)
- Df:: Frontward direction (Front direction)
- Dfr:: Rearward direction (Rear direction)
- Dc:: Diameter (Approximate diameter)
- D1:: Longer diameter
- D2:: Shorter diameter
- CG:: CG
- Da:: Particle size
- DG1, DG2:: Diagonal line

## Claims

1. A spark plug comprising:
an insulator having a through hole formed therethrough in a direction of an axis of the spark plug;
a center electrode at least partially inserted in a front end side of the through hole;
a metal terminal at least partially inserted in a rear end side of the through hole; and
a connection structure arranged in the through hole to establish electrical connection between the center electrode and the metal terminal,
wherein the connection structure comprises a composite part containing a plurality of secondary particles each formed of a plurality of primary particles of iron-containing oxide as a magnetic substance, and a conductive material coating the plurality of secondary particles,
wherein the iron-containing oxide includes at least one of an oxide represented by M_{1+A}OFe_{2-A}O₃ (where -0.5 ≤ A ≤ 0.5; and M is at least one kind of element selected from the group consisting of Mn, Fe, Co, Ni, Cu, Mg, Zn and Ca) and an oxide represented by Q₃Fe₅O₁₂ (where Q is at least one kind of element selected from the group consisting of Y, Lu, Yb, Tm, Er, Ho, Dy, Tb, Gd and Sm), and
wherein, in a cross section of the composite part taken including the axis, an average particle size of the primary particles is 0.5 µm to 100 µm, an average particle size of the secondary particles is 0.5 mm to 2.0 mm, and a porosity of the inside of the secondary particles is 5% or lower.

2. The spark plug according to claim 1,
wherein the iron-containing oxide includes an oxide represented by Ni_{X}Zn_{Y}Fe_{Z}O₄ (where 0.3 ≤ X ≤ 0.8; 0.2 ≤ Y ≤ 0.7; 1.5 ≤ Z ≤ 2.5; and X + Y + Z = 3).

3. The spark plug according to claim 1 or 2,
wherein, assuming in the cross section that the inside of the secondary particles includes an inner zone located 100 µm or more from surfaces of the secondary particles and an outer peripheral zone located 50 µm or less from the surfaces of the secondary particles, a difference between a content of iron in terms of oxide in the inner zone and a content of iron in terms of oxide in the outer peripheral zone is 5.0 wt% or less.

4. The spark plug according to any one of claims 1 to 3,
wherein the composite part includes a ceramic material containing at least one of silicon (Si), boron (B) and phosphorus (P), and an alkali metal component.

5. The spark plug according to claim 4,
wherein the alkali metal component is contained in an amount of 0.5 wt% to 6.5 wt% in terms of oxide in the composite part.
